# EUROPEAN PATENT APPLICATION

(11) **EP 2 325 282 A1**
(43) Date of publication of application: **25.05.2011**
(21) Application number: 10192037.9
(22) Date of filing: 22.11.2010
(51) Int. Cl.: C10G 11/18, B01D 45/12, B01J 8/00, B04C 5/18, B08B 9/02

(54) **FLUID CATALYTIC CRACKING PROCESS**

(30) Priority: 24.11.2009 EP 09176934
(71) Applicant: Shell Internationale Research Maatschappij B.V., 2596 HR The Hague (NL)
(72) Inventor: Brosten, David Jon, ANACORTES, WA 98221 (US); Horwege, Jason Andrew, THE WOODLANDS, TX 77381 (US); Sanborn, Richard Addison, HOUSTON, TX 77042 (US)
(74) Representative: Matthezing, Robert Maarten

(57) **Abstract**

Fluid-solids separator for separating solid catalyst particles from fluid catalytic cracking reaction product which separator comprises a cyclone (3) having a gas outlet (4) and a solids outlet (12) which solids outlet (12) is in fluid communication with a dipleg (20) comprising a fluid inlet (24) which fluid inlet (24) is in fluid communication with a fluid conduit (23) of which the end connected to the fluid inlet (24) is embedded in a refractory oxide support (21), a fluid catalytic cracking process using this separator and a process for the manufacture of this separator.

## Description

The present invention relates to a fluid-solids separator for separating solid catalyst particles from fluid catalytic cracking reaction product, to a fluid catalytic cracking process in which the fluid catalytic cracking reaction product is separated with the help of such separator, and to a process for the manufacture of such separator.

Fluid catalytic cracking processes are well known in the art. These processes comprise cracking hydrocarbon feed at high temperature in the presence of catalyst in a so-called riser reactor. Subsequently, catalyst is separated from the product obtained in a so-called disengager, and the separated catalyst particles are sent to a regenerator where fluid product is removed further from the catalyst particles before regenerating the catalyst particles. Regenerated catalyst is sent back to the riser reactor. The catalyst particles are generally separated off in the disengager with the help of a first cyclone, after which the gas separated off in the first cyclone is sent to a second cyclone. The gas separated off in the second cyclone can be sent to a third separator. The subsequent further separation in the regenerator is also generally carried out with the help of cyclones. Solid catalyst particles which have been separated off from fluid catalytic cracking reaction product in the disengager or regenerator flow via a so-called dipleg to a stripping zone or regeneration zone, respectively. These diplegs can get clogged for various reasons. The flow of the mixture of gas and catalyst particles can become too dense because it contains too little gas for example due to the length of the dipleg or because the flow of catalyst particles is already dense when leaving the separator or cyclone. Diplegs attached to cyclones are especially prone to clogging. To prevent clogging, the dipleg can be fitted with fluid inlets through which purge gas can be added. These fluid inlets are preferably located where the flow of catalyst can become very dense such as a density of up to 650 kg/m³, in some cases even as high as 700 kg/m³, and in some cases even up to 750 kg/m³. However, it has been found that it is difficult to fix the fluid conduit reliably to the fluid inlets of the dipleg. The length of the dipleg changes with temperature while the dipleg is not firmly fixed in the regenerator. Further, the connection between fluid conduit and fluid inlet is exposed to a very demanding environment. We have now found a way of reliably connecting the fluid conduit to the fluid inlet of the dipleg.

The present invention relates to a fluid-solids separator for separating solid catalyst particles from fluid catalytic cracking reaction product which separator comprises a cyclone having a gas outlet and a solids outlet which solids outlet is in fluid communication with a dipleg comprising a fluid inlet which fluid inlet is in fluid communication with a fluid conduit of which the end connected to the fluid inlet is embedded in a refractory oxide support.

It has been found that this set-up makes that the fluid conduit and fluid inlet are connected in a reliable way which makes it possible to add purge gas through a full cycle of operation of a catalytic cracking unit. Such cycle can be as long as 5 years.

The end of the fluid conduit which is connected to the fluid inlet, is embedded in a refractory oxide support. The fluid conduit will generally have a rigid part and a flexible part. The rigid part will generally comprise the end connected to the fluid inlet and will generally be a liner as described below.

The present invention can be used with each of the cyclones of the disengager or regenerator as applied in a fluid catalytic cracking process. The present invention is especially suitable for use in the disengager, more specifically in the first cyclone of the disengager. The diplegs of secondary cyclones of a disengager are generally provided with so-called flapper plates which do not fully seal off the dipleg thereby allowing some gas to flow upward countercurrent to the flow of catalyst. Such upward flowing gas assists in fluidizing the catalyst particles in the diplegs of second cyclones. The diplegs of first cyclones handle a much larger amount of catalyst. Plugging in such dipleg is more likely to occur while it is more desirable to prevent clogging as it would cause a major catalyst loss. Therefore, the present invention is especially suitable for use with the dipleg of the first cyclone of the disengager.

The refractory oxide for use in the present invention can be any material known to be suitable to someone skilled in the art. In view of the erosive nature in the catalyst regenerator, the refractory material is suitably selected such that it is highly wear resistant. Suitably the refractory material is selected from the group consisting of alumina, silica, calcium oxide, titanium oxide, magnesium oxide, iron oxide and mixtures thereof. Also the refractory may contain phosphorus oxide. Commercial examples of satisfactory refractory materials include the products from the Rescocast and Rescobond series, such as Rescobond AA-22, (ex Resco Industries) or products from the Pliline series (ex Imerys).

It is preferred that the fluid conduit is substantially longer than the dipleg in order to create sufficient flexibility.

The present invention further relates to a fluid catalytic cracking process, which process comprises (i) adding feedstock and catalyst to a riser reactor to obtain fluid catalytic cracking reaction product, and (ii) separating catalyst from the fluid catalytic cracking reaction product with the help of a fluid-solids separator according to the present invention, removing gaseous product via the gas outlet and catalyst via the solids outlet, and adding purge gas via the fluid inlet to the catalyst flowing down the dipleg.

It will be clear to someone skilled in the art that either a single or a plurality of fluid inlets can be applied. Preferably, a plurality of fluid inlets is applied.

Preferably, the fluid added via the fluid inlet is added to the dipleg in cross-flow with the flow of catalyst particles. It is preferred that the one or more feed inlets are at an angle of from 45 to 90 degrees with the axis of the dipleg. The feed inlets can be directed co-current with the flow of catalyst particles or counter-current or perpendicular to the flow of catalyst particles.

The purge gas to be used in the present invention can be any gas known to someone skilled in the art. It is especially preferred to apply a gas which aids in the stripping and/or regeneration of the catalyst. Preferably, the purge gas is selected from the group consisting of nitrogen, carbon dioxide, steam, natural gas or dry gas. Dry gas is the tail gas of the fluid catalytic cracking gas recovery unit and consists of hydrogen, methane, ethane and etheen produced in the fluid catalytic cracking process combined with inerts from the regenerator and unrecovered hydrocarbons containing 3 carbon atoms.

To prevent attrition of the catalyst particles, the velocity of the fluid entering the dipleg via the fluid inlet should not be too high. On the other hand, the velocity should not be too low to prevent catalyst entering the fluid inlet. The velocity at the fluid inlet generally is at most 50 m/s.

In order to achieve the correct velocity, it is preferred that the fluid inlet contains a nozzle. Preferably, the nozzle is a so-called two-stage nozzle which comprises a passageway and wherein pressurized fluid flows through the passageway into the dipleg.

In order to check the flow of catalyst particles in the dipleg, the pressure of the fluid in the fluid conduit can be measured. An increase in pressure indicates that the fluid inlet is becoming, or has become plugged, and action is to be taken.

Generally, the fluid conduit will be fixed to the dipleg at more than only the fluid inlet. The fluid conduit will generally have several bends and be connected to the dipleg and/or the cyclone at 2 to 10 different places.

The refractory oxide bed for use in the present invention can be prepared in various ways. A method which is especially suitable comprises (a) connecting a cap to a dipleg, (b) filling the cap with refractory oxide, (c) drilling a bore through the combination of cap, refractory oxide and dipleg, (d) inserting a liner in the bore, and (e) connecting the liner to the cap. Preferably, a metal cap is used. The metal cap preferably is connected to the dipleg by welding. The liner is preferably connected to the metal cap by welding. Preferably, the liner is connected to the metal cap only. It is preferred that the liner is not connected to the dipleg. The cap can be any shape known to be suitable to someone skilled in the art.

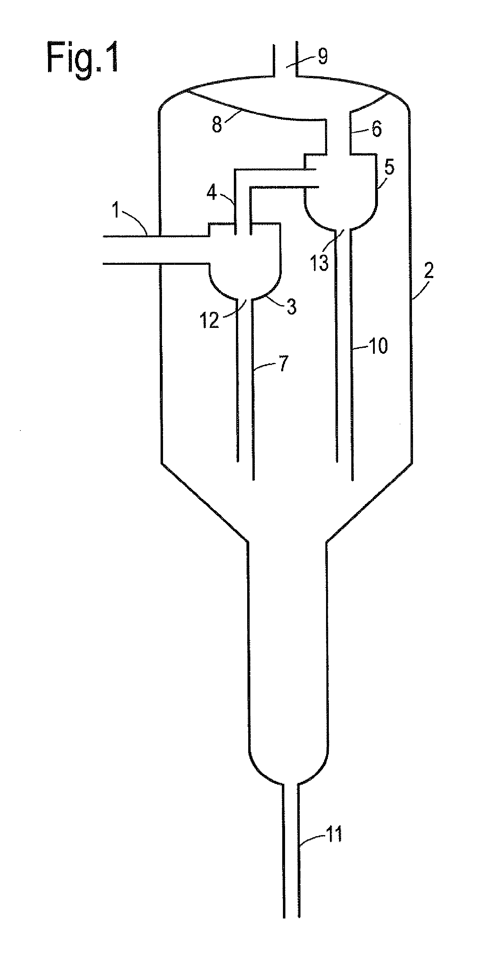

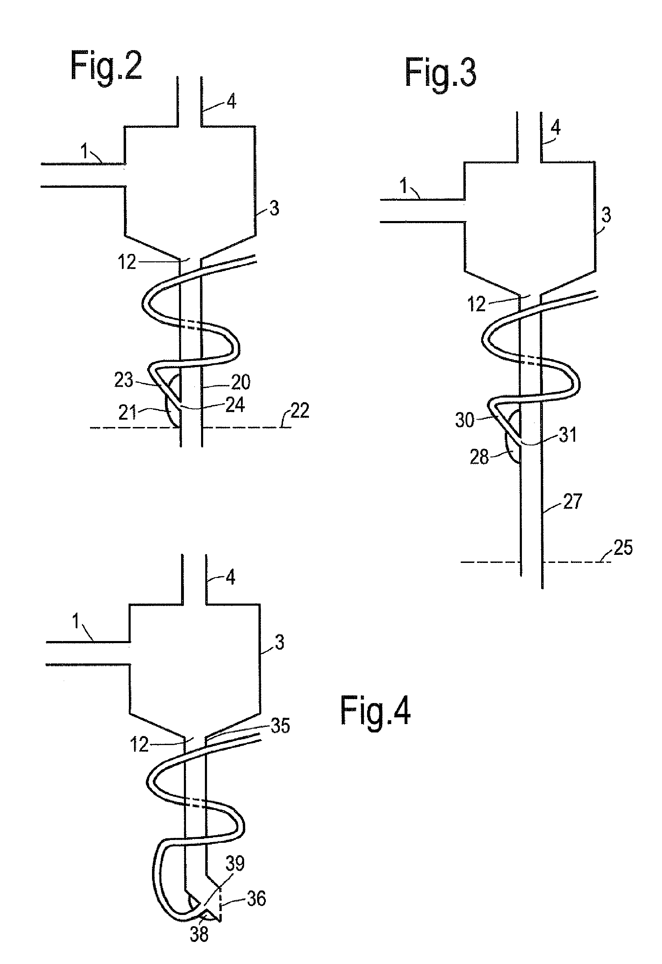

The invention shall be further elucidated by means of the following figures. Figure 1 represents a vertical cross section of a fluids-solid separator according to the invention wherein the fluid inlet, fluid conduit and refractory oxide support are not shown. Figures 2, 3 and 4 represent detailed vertical cross sections of various embodiments of the present invention, wherein the disengager vessel is not shown. Where the same reference numerals are used in Figures 1, 2, 3 and 4, they refer to the same or similar objects.

The embodiment shown in Figure 1 comprises a disengager 2 having an inlet 1 for introducing fluid catalytic cracking reaction product comprising solid catalyst particles. Disengager 2 comprises first cyclone 3, second cyclone 5, gas outlet 9 and solids outlet 11. The fluid catalytic cracking reaction product is sent via line 1 to the first cyclone 3 comprising gas outlet 4 and solids outlet 12 connected to dipleg 7. Gas outlet 4 guides gas from the first cyclone 3 to the second cyclone 5. The second cyclone 5 has a gas outlet 6 which is connected to plenum 8, and a solids outlet 13 connected to dipleg 10. The fluid connection between the first cyclone and second cyclone can vary as known to be suitable to someone skilled in the art.

Figure 2 shows an embodiment of which dipleg 20 has a fluid inlet 24 right above the top of the fluidized catalyst bed 22. In this embodiment, fluid conduit 23 is in fluid communication with fluid inlet 24. The part of the fluid conduit 23 which is embedded in refractory oxide support 21 is rigid. The rest of fluid conduit 23 is flexible. Although only a single fluid inlet is shown, a plurality of fluid inlets can be present. If the dipleg is a vertical tube, it is generally preferred to have a plurality of fluid inlets evenly distributed along the circumference of the tube at similar distance from the solids outlet. The opening of the downstream end of the dipleg 20 is below the upper level of the catalyst bed 22 which prevents gas flowing upwards from the catalyst stripping zone.

Figure 3 shows an embodiment containing a relatively long dipleg 27. The exact location of the fluid inlet will depend on the circumstances of the specific case such as the height of the fluidized catalyst bed 25. Only a single fluid inlet 31 is shown but generally a plurality of fluid inlets will be present as described in relation with Figure 2. Fluid inlet 31 is in fluid communication with fluid conduit 30. Fluid conduit 30 is embedded in refractory oxide support 28.

Figure 4 shows an embodiment containing a slanted dipleg 35 containing a fluid inlet 39 in fluid communication with fluid conduit 37. Fluid conduit 37 is embedded in refractory oxide support 38. It is preferred that the fluid inlet is present at the bottom side of the slanted dipleg. If the catalyst bed does not cover the downstream opening of the dipleg, it can be preferred to close this opening with the help of a shutter valve. The downstream opening of dipleg 35 is closed by shutter valve 36.

## Claims

1. Fluid-solids separator for separating solid catalyst particles from fluid catalytic cracking reaction product which separator comprises a cyclone having a gas outlet and a solids outlet which solids outlet is in fluid communication with a dipleg comprising a fluid inlet which fluid inlet is in fluid communication with a fluid conduit of which the end connected to the fluid inlet is embedded in a refractory oxide support.

2. Fluid-solids separator according to claim 1 in which the feed inlets are at an angle of from 45 to 90 degrees with the axis of the dipleg.

3. Fluid catalytic cracking process, which process comprises
(i) adding feedstock and catalyst to a riser reactor to obtain fluid catalytic cracking reaction product,
(ii) separating catalyst from the fluid catalytic cracking reaction product with the help of the fluid-solids separator according to claim 1 and/or 2, removing gaseous product via the gas outlet and catalyst via the solids outlet, and adding purge gas via the fluid inlet to the catalyst flowing down the dipleg.

4. Fluid catalytic cracking process according to claim 3, in which process the purge gas is selected from the group consisting of nitrogen, carbon dioxide, steam, natural gas and dry gas.

5. Process for the manufacture of a fluid-solids separator according to claim 1 and/or 2, which process comprises
(a) connecting a cap to a dipleg,
(b) filling the cap with refractory oxide,
(c) drilling a bore through the combination of cap, refractory oxide and dipleg,
(d) inserting a liner in the bore, and
(e) connecting the liner to the cap.
